# EUROPEAN PATENT APPLICATION

(11) **EP 3 085 973 A1**
(43) Date of publication of application: **26.10.2016**
(21) Application number: 14892038.2
(22) Date of filing: 21.08.2014
(51) Int. Cl.: F16B 13/08, E04B 1/41

(54) **POST-INSTALLED ANCHOR, POST-INSTALLED ANCHOR IMPLEMENTATION METHOD, POST-INSTALLED ANCHOR SYSTEM AND ROTATION-STOPPING TOOL**

(30) Priority: 15.05.2014 JP 2014101198
(71) Applicant: FS Technical Corporation, Tokyo 125-0054 (JP)
(72) Inventor: FUJITA, Shogo, Tokyo 125-0054 (JP)
(74) Representative: MERH-IP Matias Erny Reichl Hoffmann Patentanwälte PartG mbB
(86) International application number: PCT/JP2014/004315
(87) International publication number: WO 2015/173849

(57) **Abstract**

Provided is a post-installed anchor by which high drawing strength can be reliably maintained and an anchoring operation can be stably performed, or the like. A post-installed anchor 10, which is anchored into an anchor hole 100 having a diameter expansion portion 103, includes: an anchor main-body 11 inserted in the anchor hole 100; a plurality of straight-shaped guide opening portions 14 formed to penetrate in a radial direction at positions corresponding to the diameter expansion portion 103; a plurality of spread pieces 12 slidably provided at the respective guide opening portions 14 and engaged to the diameter expansion portion 103 in an anchoring state in which the plurality of spread pieces 12 spread in the radial direction; and a cone portion 13 that slides the respective spread pieces 12 to an outside in the radial direction to spread the plurality of spread pieces 12.

## Description

### TECHNICAL FIELD

The present invention relates to a post-installed anchor anchored into an anchor hole bored in a frame such as concrete, a method for installing the post-installed anchor, a post-installed anchor system, and a rotation preventing jig.

### BACKGROUND ART

As a post-installed anchor of this type, a post-installed anchor (hereinafter called an "anchor"), which is used when a suspended object such as a ceiling board is fixed to a frame such as a concrete slab, has been known (see Patent Document 1). The anchor is driven into a prepared hole having a special shape, and the prepared hole has a prepared-hole general portion, a tapered-hole portion having an expanded diameter and connected to the prepared-hole general portion, and a straight-hole portion connected to the tapered-hole portion and having a diameter smaller than that of the prepared-hole portion.

The anchor has a large-diameter shaft portion on its base side, a plug connected to the large-diameter shaft portion, and a sleeve attached to the plug. The plug has an annular protrusion portion and a tapered surface connected to the annular protrusion portion, and the sleeve has a fitting groove and an extension portion corresponding to the annular protrusion portion and the tapered surface, respectively. Further, when the anchor is put into the prepared hole, the lower end of the extension portion contacts the bottom of the tapered-hole portion.

When the large-diameter shaft portion is driven in this state, the tapered surface of the plug pushes the extension portion of the sleeve open and at the same time the annular protrusion portion of the plug is fitted in the fitting groove of the sleeve. The push-opened extension portion is brought into press-contact with the tapered-hole portion, whereby the sleeve is anchored (fixed) into the frame. In addition, the annular protrusion portion fitted in the fitting groove is prevented from being drawn, and the sleeve, the plug, and the large-diameter shaft portion are integrated with each other in a drawing direction.

[Patent Document 1] JP-A-2008-183707

### DISCLOSURE OF THE INVENTION

### PROBLEMS THAT THE INVENTION IS TO SOLVE

In the above conventional post-installed anchor, the sleeve is made of a member different from those of the large-diameter shaft portion and the plug. When the post-installed anchor is driven, the sleeve is anchored and at the same time prevented from being drawn from the plug. Therefore, when the extension portion is loosely brought into press-contact with the tapered surface of the prepared hole or when the plug is loosely fitted in the sleeve due to the manufacturing errors of the respective members, drawing strength reduces and the anchor easily drops from the prepared hole.

In addition, the post-installed anchor is structured such that the annular protrusion portion of the plug is fitted in the fitting groove of the sleeve when the large-diameter shaft portion is driven. Therefore, when the annular protrusion portion gets across the marginal portion of the fitting groove (first time) and when the annular protrusion portion is completely fitted in the fitting groove (second time), a driving load increases. Thus, there is a likelihood that a driving operation is finished since a driving load for the first time is misunderstood as a driving load for the second time. In this case, the anchor easily drops from the prepared hole.

The present invention has an object of providing a post-installed anchor by which high drawing strength can be reliably maintained and an anchoring operation can be stably performed, a method for installing the post-installed anchor, a post-installed anchor system, and a rotation preventing jig.

### MEANS FOR SOLVING THE PROBLEMS

The present invention provides a post-installed anchor anchored into an anchor hole having a diameter expansion portion at a prescribed depth position thereof, the post-installed anchor including: an anchor main-body inserted in the anchor hole; a plurality of spread pieces slidably provided in the anchor main-body so as to spread toward the diameter expansion portion; and a cone portion that slides each of the plurality of spread pieces to an outside.

According to the configuration, the plurality of spread pieces is configured to be slidable so as to spread toward a diameter expansion portion. Therefore, when slid by the cone portion, the plurality of spread pieces protrudes from the anchor main-body to be brought into press-contact with and engaged to the diameter expansion portion of an anchor hole. The respective spread pieces are provided in the anchor main body as separate bodies and configured to be slidable. Therefore, the respective spread pieces can be reliably spread in such a manner that a small force is only applied to the cone portion. That is, an anchoring operation can be stably performed regardless of the skills of an operator. In addition, since the plurality of protruding spread pieces is engaged to a diameter expansion portion so as to be caught, high drawing strength can be reliably maintained. Note that the cone portion may be a driven type or a screwed type.

In this case, the respective spread pieces are preferably slidably provided in a radial direction with respect to the anchor main-body.

According to the configurations, the spreading structure of the plurality of spread pieces can be simplified by the cone portion. In addition, the spreading structure can be easily applied to an anchor main-body having a small diameter due to its simplicity.

In this case, the plurality of spread pieces is preferably constituted by two spread pieces arranged at positions point-symmetrically by 180°.

According to the configuration, the spread pieces brought into press-contact with and engaged to the diameter expansion portion of an anchor hole receive a shearing force against a drawing force. In this case, the spread pieces can have a large area to receive the shearing force.

In addition, the respective spread pieces are preferably slidably provided at guide opening portions formed in the anchor main-body and formed into a shape complementary to the guide opening portions.

According to the configuration, the respective spread pieces are prevented from rattling against the respective opening portions. Therefore, the shearing strength of the plurality of spread pieces can mainly serve as drawing strength. Thus, high drawing strength can be maintained.

In this case, tip-end surfaces of the respective spread pieces are preferably formed into an arc surface following an outer peripheral surface of the anchor main-body.

According to the configuration, the entire regions of the tip ends of the respective spread pieces are engaged to a diameter expansion portion so as to be caught when the plurality of spread pieces is brought into a spreading state.

On the other hand, the respective spread pieces are preferably temporarily fixed to the anchor main-body such that engagement-side tip ends thereof do not protrude from the outer peripheral surface of the anchor main-body.

According to the configuration, the spread pieces can be effectively prevented from coming off the guide opening portions when they are carried or stored. In addition, the spread pieces do not hinder the insertion of the anchor main-body in an anchor hole. Accordingly, the clearance between an anchor hole and a post-installed anchor can be minimized, and the post-installed anchor can be prevented from rattling when anchored. Note that the respective spread pieces are preferably temporarily fixed by partial bonding, an adhesive tape, or the like.

In addition, the cone portion preferably includes a cone-portion main-body that moves the plurality of spread pieces to the outside in the radial direction and a male-screw portion that is threadedly engaged with a female-screw portion formed on an inner peripheral surface of the anchor main-body and squeezes the cone-portion main-body.

According to the configuration, the plurality of spread pieces can be slid to the outside in the radial direction via the cone-portion main-body in such a manner that the male-screw portion is screwed. In this case, the cone-portion main-body is squeezed in a screwing manner. Therefore, when the male-screw portion is fastened at a constant torque by a driver drill or the like, a force at which the plurality of spread pieces is brought into press-contact with a diameter expansion portion can be also made constant. In addition, the male-screw portion is threadedly engaged with the female-screw portion. Therefore, even when the plurality of spread pieces receives a strong reaction force from a diameter expansion portion, the cone-portion main-body can be prevented from being loosed (coming off). Note that the female-screw portion formed in the anchor main-body is preferably one obtained by extending a screw hole for a hanging bolt or a connecting bolt or preferably formed separately from the screw hole. When the screw hole is extended, the hanging bolt or the connecting bolt is more preferably screwed up to a position with which the hanging bolt or the connecting bolt is brought into contact (the male-screw portion is prevented from being loosed).

In this case, the cone-portion main-body preferably includes a tapered portion formed into a tapered shape, and the cone-portion main-body and the male-screw portion are preferably integrally formed.

According to the configuration, the cone portion can be easily manufactured as a single component. In addition, the cone portion can be easily embedded in the anchor main-body. Note that the inner-end surfaces of the spread pieces contacting the tapered portion are preferably formed into a slant surface having a shape complementary to the slant of the tapered portion.

Similarly, the cone-portion main-body preferably includes a wedge portion having a plurality of slant surfaces corresponding to the plurality of spread pieces, and the cone-portion main-body and the male-screw portion are preferably separately formed.

According to the configuration, the respective spread pieces can be smoothly slid by the slant surfaces of the wedge portion without any difficulty. In addition, when the male-screw portion is fastened at a constant torque, a force at which the plurality of spread pieces is brought into press-contact with a diameter expansion portion can be also made constant. Note that the inner-end surfaces of the respective spread pieces contacting the wedge portion are preferably formed into a slant surface having a shape complementary to the slant surfaces of the wedge portion.

On the other hand, the cone portion preferably includes a cone-portion main-body that moves the plurality of spread pieces to the outside in the radial direction and a bolt portion that has a head portion thereof rotatably supported by an inner peripheral surface of the anchor main-body and is threadedly engaged with the cone-portion main-body in a shaft direction thereof.

According to the configuration, the plurality of spread pieces can be easily slid to the outside in the radial direction in such a manner that the bolt portion is rotated to attract (or squeeze) the cone-portion main-body. In this case, the cone-portion main-body is attracted (squeezed) in a screwing manner. Therefore, when the bolt portion is fastened at a constant torque by a driver drill or the like, a force at which the plurality of spread pieces is brought into press-contact with a diameter expansion portion can be also made constant. In addition, the cone-portion main-body is threadedly engaged with the bolt portion. Therefore, even when the spread pieces receive a strong reaction force from a diameter expansion portion, the cone-portion main-body can be prevented from being loosed.

In addition, a rotation preventing protrusion, which prevents the anchor main-body from rotating with the cone portion when the cone portion is fastened, preferably protrudes from a tip end of the anchor main-body.

According to the configuration, the rotation preventing protrusion prevents the anchor main-body from rotating with the cone portion when the cone portion is fastened, i. e. , when the male-screw portion or the bolt portion is rotated. Therefore, the cone-portion main-body can appropriately squeeze or attract the spread pieces.

The present invention provides a method for installing the post-installed anchor described above, the method including: a boring step of boring a prepared-hole portion in the anchor hole; a diameter expansion step of forming the diameter expansion portion in the prepared-hole portion; an inserting step of inserting the post-installed anchor in the anchor hole; and an anchoring step of spreading the plurality of spread pieces with the cone portion.

According to the configuration, an anchor hole is first formed through the boring step and the diameter expansion step. Next, the post-installed anchor is inserted in the anchor hole, and then the plurality of spread pieces is spread by the cone portion. Since a diameter expansion portion is formed in a prepared-hole portion in advance as described above, the plurality of spreading spread pieces can be brought into press-contact with and engaged to the diameter expansion portion. Thus, the anchoring operation of the post-installed anchor can be stably performed, and the high drawing strength of the post-installed anchor brought into an anchoring state can be reliably maintained.

In this case, the method preferably further includes an injecting step of injecting an adhesive into the anchor hole, the injecting step being performed between the diameter expansion step and the inserting step.

According to the configuration, the post-installed anchor can be fixed (anchored) into an anchor hole not only by a mechanical fashion but also by a chemical fashion using an adhesive. Accordingly, the post-installed anchor can be firmly fixed into an anchor hole (the post-installed anchor can be prevented from shaking). In addition, the cone portion can be also prevented from being loosed due to an attached adhesive in its fixed state.

The present invention provides a post-installed anchor system including: the post-installed anchor described above; and a diameter expansion drill bit having a cutting-blade portion, which forms the diameter expansion portion in the anchor hole, at a tip end thereof, wherein, in the shaft direction, a length of the cutting-blade portion is formed to be longer than a length of the respective spread pieces, and a distance from a tip end of the post-installed anchor to base ends of the respective spread pieces is substantially the same as a distance from a tip end of the diameter expansion drill bit to a base end of the cutting-blade portion.

According to the configuration, the position of a diameter expansion portion formed by the diameter expansion drill bit can correspond to the positions of the plurality of spread pieces of the post-installed anchor anchored into an anchor hole. Accordingly, the post-installed anchor can be anchored such that the plurality of spread pieces is caught in a diameter expansion portion by a simple operation. Thus, the anchoring operation of the post-installed anchor can be stably performed, and the high drawing strength of the post-installed anchor brought into an anchoring state can be reliably maintained.

The present invention provides a rotation preventing jig that prevents the anchor main-body from rotating with the cone portion when the cone portion is fastened and is used for the post-installed anchor described above, the post-installed anchor having an engagement concave portion formed on a base end of the anchor main-body, the rotation preventing jig including: a cylindrical jig main-body that has an engagement convex portion, which engages with the engagement concave portion, at a tip end thereof and has a tool insertion hole for fastening the cone portion formed therein; and a jig holder that holds the jig main-body at a tip end thereof and is formed into a funnel shape.

According to the configuration, the jig holder holding the jig main-body is handled to cause the engagement convex portion of the jig main-body to engage with the engagement concave portion of the anchor main-body inserted in an anchor hole. Thus, the useless rotation of the anchor main-body is prevented. In this state, a tool used to fasten the cone portion is put on the cone portion via the jig main-body from the side of the funnel-shaped jig holder to fasten the cone portion. That is, the cone portion can be rotated in a state in which the anchor main-body is prevented from rotating. Note that the jig main-body and the jig holder may be integrally formed or may be separately formed.

### BRIEF DESCRIPTION OF THE DRAWINGS

FIGS. 1A and 1B are cross-sectional views of an anchor hole into which a post-installed anchor is anchored.
FIG. 2 is a view showing the structure of a diameter expansion device that forms the diameter expansion portion of the anchor hole.
FIGS. 3A and 3B are a partial cross-sectional view of the post-installed anchor according to a first embodiment when seen from its front side and a partial cross-sectional view thereof when seen from its lateral side, respectively.
FIGS. 4A to 4D are a cross-sectional view of the post-installed anchor according to the first embodiment in its non-anchoring state, a cross-sectional view taken along line b-b in the cross-sectional view of the post-installed anchor in the non-anchoring state, a cross-sectional view of the post-installed anchor in its anchoring state, and a cross-sectional view taken along line d-d in the cross-sectional view of the post-installed anchor in the anchoring state, respectively.
FIGS. 5A to 5C are a cross-sectional view showing a boring step, a cross-sectional view showing a diameter expansion step, and a cross-sectional view showing an injecting step, respectively, in a method for installing the post-installed anchor according to the first embodiment.
FIGS. 6A and 6B are a cross-sectional view showing an inserting step and a cross-sectional view showing an anchoring step, respectively, in the method for installing the post-installed anchor according to the first embodiment.
FIGS. 7A to 7D are a cross-sectional view of a post-installed anchor according to a second embodiment in its non-anchoring state, a cross-sectional view taken along line b-b in the cross-sectional view of the post-installed anchor in the non-anchoring state, a cross-sectional view of the post-installed anchor in its anchoring state, and a cross-sectional view taken along line d-d in the cross-sectional view of the post-installed anchor in the anchoring state, respectively.
FIGS. 8A to 8D are a cross-sectional view of a post-installed anchor according to a third embodiment in its non-anchoring state, a cross-sectional view taken along line b-b in the cross-sectional view of the post-installed anchor in the non-anchoring state, a cross-sectional view of the post-installed anchor in its anchoring state, and a cross-sectional view taken along line d-d in the cross-sectional view of the post-installed anchor in the anchoring state, respectively.
FIGS. 9A to 9D are a cross-sectional view of the post-installed anchor according to a fourth embodiment in its non-anchoring state, a cross-sectional view taken along line b-b in the cross-sectional view of the post-installed anchor in the non-anchoring state, a cross-sectional view of the post-installed anchor in its anchoring state, and a cross-sectional view taken along line d-d in the cross-sectional view of the post-installed anchor in the anchoring state, respectively.
FIGS. 10A to 10D are a cross-sectional view of a post-installed anchor according to a fifth embodiment in its non-anchoring state, a cross-sectional view taken along line b-b in the cross-sectional view of the post-installed anchor in the non-anchoring state, a cross-sectional view of the post-installed anchor in its anchoring state, and a cross-sectional view taken along line d-d in the cross-sectional view of the post-installed anchor in the anchoring state, respectively.
FIG. 11 is a structural view of a rotation preventing jig according to an embodiment.

### DESCRIPTION OF EXEMPLARY EMBODIMENTS

Hereinafter, a description will be given, with reference to the accompanying drawings, of a post-installed anchor, a method for installing the post-installed anchor, a post-installed anchor system, and a rotation preventing jig according to an embodiment of the present invention. The post-installed anchor is a so-called metal expansion anchor provided to support a structure, equipment, or the like with respect to a concrete frame, a concrete base, or the like such as a slab, an exterior wall, and an interior wall. Particularly, the post-installed anchor of the embodiment is one capable of preventing a driving failure and maintaining high drawing strength in cooperation with an anchor hole having a diameter expansion portion.

In addition, the post-installed anchor system is one in which the post-installed anchor and a diameter expansion drill bit used to form the anchor hole having the special shape are systematized. Therefore, prior to the detailed description of the post-installed anchor, a description will be briefly given of the anchor hole having the special shape and the diameter expansion drill bit that forms the diameter expansion portion of the anchor hole.

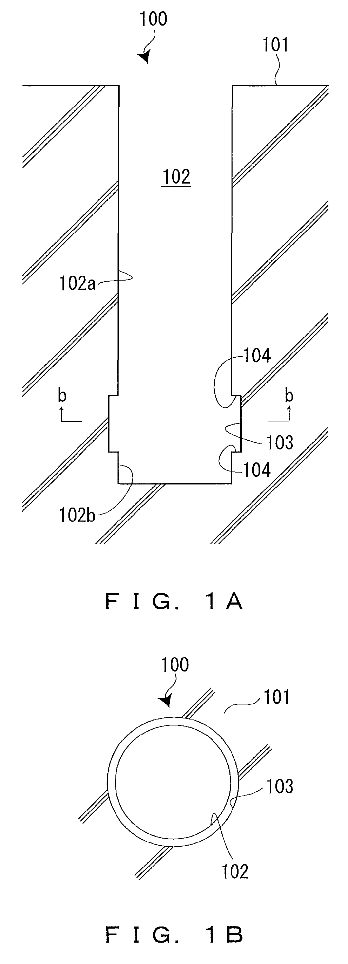

FIGS. 1A and 1B show an anchor hole formed in a concrete frame. As shown in the figures, an anchor hole 100 has a straight-shaped prepared-hole portion 102 bored in a frame 101 and a diameter expansion portion 103 formed on the back side (tip-end side) of the prepared-hole portion 102 so as to have a larger diameter than that of the prepared-hole portion 102. In this case, the diameter expansion portion 103 is constituted by a cylindrical portion having annular step portions 104 at two spots and protruding outwardly from the prepared-hole portion 102. In addition, the prepared-hole portion 102 has, across the diameter expansion portion 103, a long opening-side hole portion 102a on its opening side and a short bottom-side hole portion 102b on its hole-bottom side. As will be described in detail later, the prepared-hole portion 102 and the diameter expansion portion 103 are formed using different drill bits.

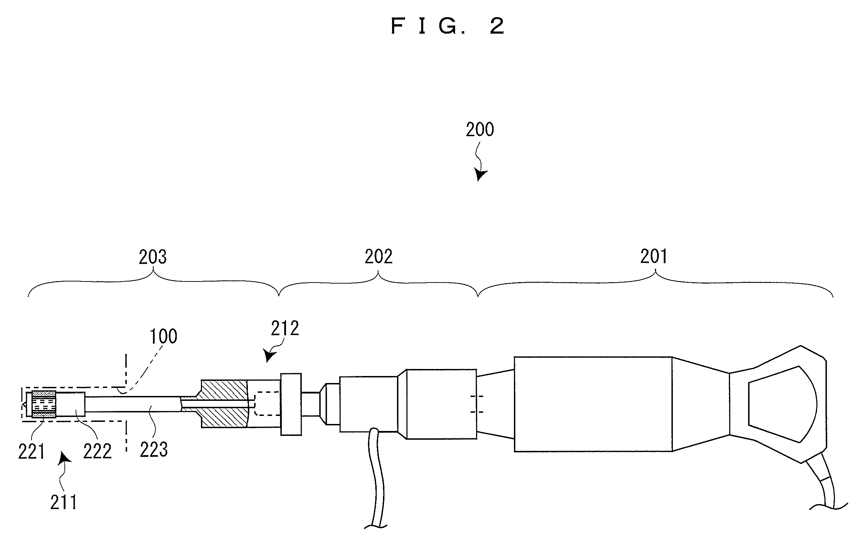

FIG. 2 shows a diameter expansion device including a diameter expansion drill bit. As shown in the figure, a diameter expansion device 200 has an electric drill 201 serving as a power source, a cooling-liquid attachment 202 attached to the electric drill 201, and a diameter expansion drill bit 203 attached to the cooling-liquid attachment 202. A cooling-liquid supply device, which is not shown in the figure, is connected to the cooling-liquid attachment 202, and cooling liquid is supplied from the cooling-liquid supply device to the diameter expansion drill bit 203 via the cooling-liquid attachment 202.

The diameter expansion drill bit 203 has a bit portion 211 that expands the diameter of the prepared-hole portion 102 on its tip-end side and a shaft portion 212 detachably attached to the cooling-liquid attachment 202 on its base-end side. The bit portion 211 has two cutting-blade portions 221 that grind the prepared-hole portion 102 to form the diameter expansion portion 103, a cutting-blade holding portion 222 that movably holds the two cutting-blade portions 221 in a radial direction, and a shank portion 223 that supports the two cutting-blade portions 221 via the cutting-blade holding portion 222.

Further, the shank portion 223 and the shaft portion 212 are integrally formed. Further, the cutting-blade portions 221 are constituted by diamond cutting-blades having an arc shape in cross section or cemented carbide cutting-blades. When the electric drill 201 is driven to rotate the diameter expansion drill bit 203, a centrifugal force is applied to the two cutting-blade portions 221, whereby the two respective cutting-blade portions 221 spread toward an outside in the radial direction (mutually move in parallel in opposite directions).

Thus, the two cutting-blade portions 221 contact and grind the inner surface of the prepared-hole portion 102 to form the diameter expansion portion 103 in the prepared-hole portion 102. In addition, the tip end of the cutting-blade holding portion 222 protrudes slightly from the cutting-blade portions 221 in a shaft direction, and the protruding portion forms the above bottom-side hole portion 102b. Note that the cutting depth of the diameter expansion portion 103 is only required to be a depth at which the post-installed anchor 10 that will be described later is engaged in its drawing direction, and is preferably in the range of 0.5 to 1.0 mm or so.

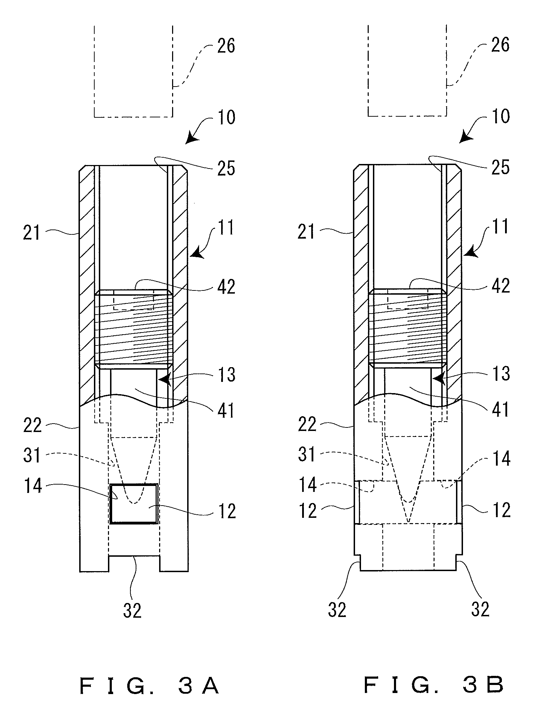

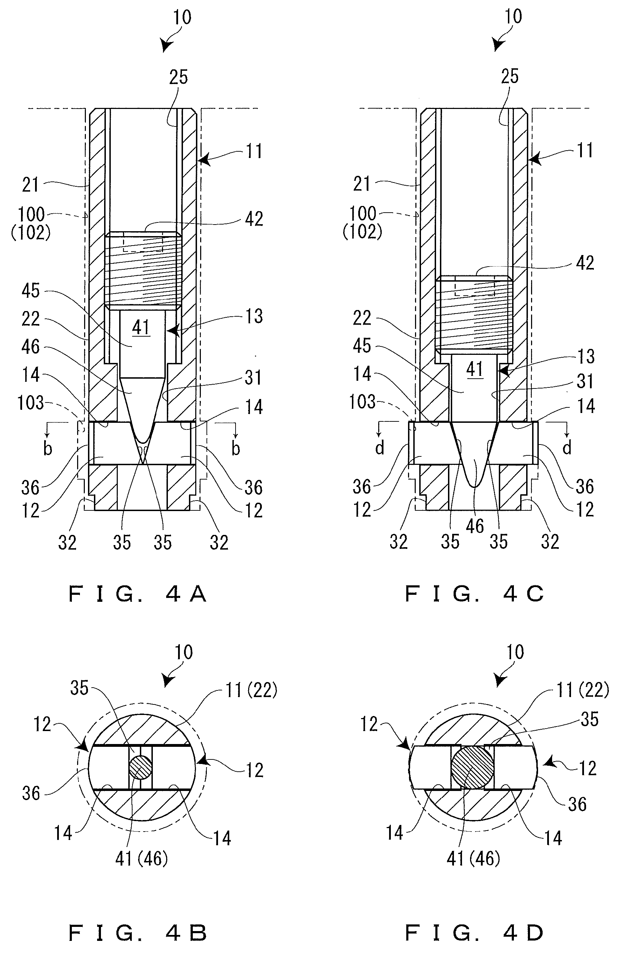

Next, a description will be given, with reference to FIGS. 3A and 3B and FIGS. 4A to 4D, of a post-installed anchor according to a first embodiment. FIGS. 3A and 3B are structural views of the post-installed anchor according to the first embodiment, and FIGS. 4A to 4D are cross-sectional structural views in a state in which FIGS. 3A and 3B are rotated by 90°. As shown in both figures, a post-installed anchor 10 has a cylindrical anchor main-body 11 that is inserted in the anchor hole 100, a plurality of (two in the embodiment) spread pieces 12 provided on the tip-end side of the anchor main-body 11, and a cone portion 13 that spreads the plurality of spread pieces 12 from an inside. In addition, the post-installed anchor 10 has a plurality of (two in the embodiment) guide opening portions 14 that slidably supports the plurality of spread pieces 12 at the position of the anchor main-body 11 corresponding to the diameter expansion portion 103 when the anchor main-body 11 is inserted in the anchor hole 100.

That is, at the lower portion of the anchor main-body 11 corresponding to the diameter expansion portion 103, the two guide opening portions 14 are formed so as to cross the shaft direction of the anchor main-body 11, and the two spread pieces 12 are slidably supported by the two guide opening portions 14. In this case, the anchor main-body 11 and the two spread pieces 12 are separately formed, and these members and the cone portion 13 are also separately formed. Further, the anchor main-body 11, the two spread pieces 12, and the cone portion 13 are made of soft steel, stainless steel, or the like and constitute a so-called metal expansion anchor.

The anchor main-body 11 is formed into a cylindrical shape having a stepped inner peripheral surface and integrally formed by a base-end-side bolt support portion 21 to which a joining bolt 26 that will be described later is attached and a tip-end-side frame fixing portion 22 fixed to the concrete frame 101 (see FIGS. 3A and 3B).

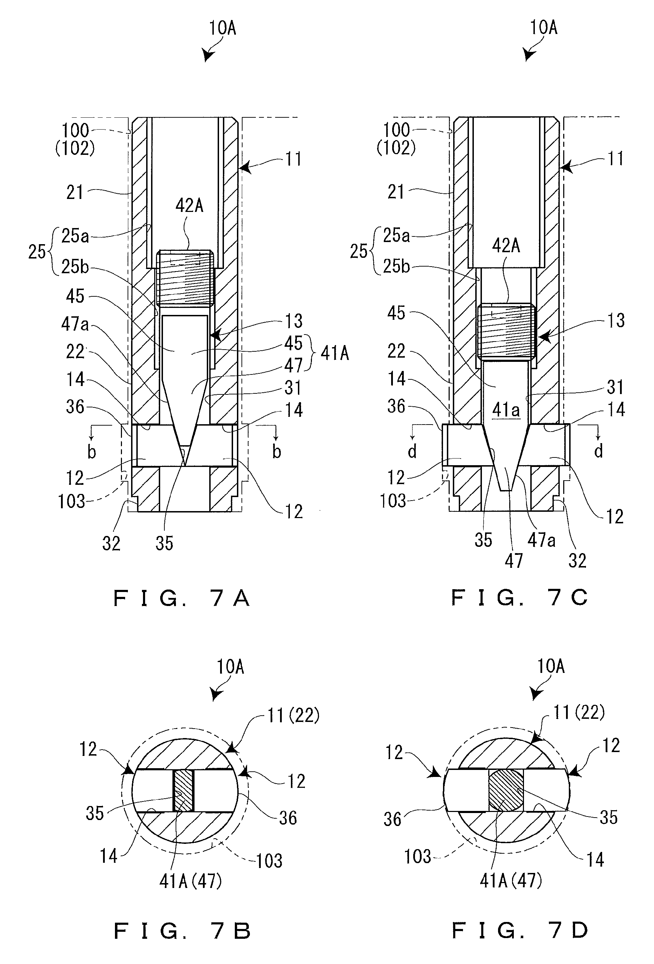

The bolt support portion 21 has a female-screw portion 25 on its inner peripheral surface. A male-screw portion 42 of the cone portion 13 that will be described later is threadedly engaged with the female-screw portion 25, and the joining bolt 26 (generally, any bolt) such as a hanging bolt and a connecting bolt for a support target is screwed into the female-screw portion 25. That is, the cone portion 13 is threadedly engaged with the female-screw portion 25, and the joining bolt 26 is attached to the female-screw portion 25 after the anchor main-body 11 is fixed (anchored) into the anchor hole 100. Note that a female-screw portion 25 for the joining bolt 26 and a female-screw portion 25 for the cone portion 13 may be separately formed (see, for example, FIGS. 7A to 7D).

The inner peripheral surface of the frame fixing portion 22 has a loose-insertion hole 31 that is connected to the above female-screw portion 25 and causes a cone-portion main-body 41 of the cone portion 13 that will be described later to be loosely inserted therein. In addition, the frame fixing portion 22 has the above two guide opening portions 14 formed so as to cross its shaft direction. The two guide opening portions 14 are provided at positions at which the guide opening portions 14 correspond to the diameter expansion portion 103 when the post-installed anchor 10 (the anchor main-body 11) is inserted in the anchor hole 100. Further, in the two guide opening portions 14, the above two spread pieces 12 engaged to the diameter expansion portion 103 are slidably held in the radial direction.

The respective guide opening portions 14 are formed to penetrate in the radial direction of the frame fixing portion 22 and arranged at positions point-symmetrically by 180°. That is, the two guide opening portions 14 extend in the diameter direction (direction crossing the axis line) of the frame fixing portion 22 via the loose-insertion hole 31. Accordingly, the two spread pieces 12 held by the respective guide opening portions 14 slide and move in directions opposite to each other when spreading.

The respective guide opening portions 14 are constituted by straight holes having a rectangular shape in cross section. In this case, the width of the guide opening portions 14 is formed to be the same in size as the diameter of the loose-insertion hole 31 in consideration of the thickness of the frame fixing portion 22 in this portion. In addition, the height of the guide opening portions 14 is formed to have a size corresponding to the spread pieces 12 in consideration of resistance against a shearing force.

Moreover, at the tip end of the frame fixing portion 22, i.e., at the tip end of the anchor main-body 11, two notch portions 32 are formed. The respective notch portions 32 are formed so as to be cut into a rectangular shape from the tip end of the frame fixing portion 22, provided at the same positions as those of the two guide opening portions 14 in the peripheral direction of the frame fixing portion 22, and formed to have the same width as that of the two guide opening portions 14.

Thus, the tip end of the anchor main-body 11 is formed into a concavo-convex shape in the peripheral direction, and a frictional force against a rotation force is applied to the place between the tip end and (the hole bottom of) the anchor hole 100 when the rotation force is applied to the anchor main-body 11. That is, when the cone portion 13 is screwed, the two notch portions 32 can prevent the anchor main-body 11 from rotating with the cone portion 13.

When fitted in the anchor hole 100 (the prepared-hole portion 102), the post-installed anchor 10 (the anchor main-body 11) of the embodiment is originally tapped to be inserted in the anchor hole 100 (the prepared-hole portion 102). Therefore, when the cone portion 13 is screwed, the anchor main-body 11 does not basically rotate with the cone portion 13 (in design). However, when the post-installed anchor 10 is loosely fitted due to its manufacturing error or the boring error of the anchor hole 100, the concavo-convex shape of the tip end prevents the anchor main-body 11 from rotating with the cone portion 13.

Note that a fitting portion, which is fitted in the opening portion of the anchor hole 100 so as to be bitten at the above fitting, may be provided on the outer peripheral surface of the base end of the anchor main-body 11. In addition, the shape and the number of the notch portions 32 are optional. For example, the shape of the notch portions 32 is a triangle or an inverted trapezoid. The number of the notch portions 32 is one or three or more.

The two spread pieces 12 are each slidably held by the above guide opening portions 14. Therefore, the two spread pieces 12 are arranged at positions point-symmetrically by 180° and arrange at positions at which the two spread pieces 12 correspond to the diameter expansion portion 103 when the post-installed anchor 10 (the anchor main-body 11) is inserted in the anchor hole 100. The respective spread pieces 12 are formed into a rectangular shape in cross section, which is complementary to the above guide opening portions 14 having a rectangular shape in cross section. In this case, the spread pieces 12 are fitted in such a manner as to smoothly slide into the guide opening portions 14 without rattling.

In addition, since a shearing force is applied to the respective spread pieces 12 when a drawing force is applied to the post-installed anchor 10, the respective spread pieces 12 have a cross-sectional area enough to resist the shearing force. In this case, since the width of the spread pieces 12 depends on the width of the guide opening portions 14, the spread pieces 12 secure a cross-sectional area enough to resist the shearing force with their height. Further, the length of the diameter expansion portion 103 in the shaft direction is formed to be longer than the height of the spread pieces 12 such that the spread pieces 12 are reliably engaged to the diameter expansion portion 103 at anchoring.

On the other hand, the inner ends of the respective spread pieces 12 that face the cone portion 13 have a slant surface 35 following (having the same angle as) the tapered angle of the cone portion 13 (see FIGS. 4A and 4C). Since the inner ends of the spread pieces 12 are formed to have the flat slant surface (see FIG. 4B), the cone portion 13 linearly contacts the spread pieces 12 at one spot and slides the same to an outside in the radial direction. Note that the inner ends of the spread pieces 12 may be formed into a "V"-shape in plan view. In this case, the cone portion 13 linearly contacts the spread pieces 12 at two spots.

On the other hand, the outer ends (engagement-side ends) of the respective spread pieces 12 that face the diameter expansion portion 103 have an arc surface 36 following the outer peripheral surface of the anchor main-body 11 (the frame fixing portion 22) (see FIG. 4B). Further, the respective spread pieces 12 are temporarily fixed to the anchor main-body 11 so as not to protrude from the outer peripheral surface of the anchor main-body 11. The spread pieces 12 of the embodiment are arranged such that the arc surfaces 36 are flush with the outer peripheral surface of the anchor main-body 11. In this state, the spread pieces 12 are lightly bonded (temporarily fixed) to the guide opening portions 14 by an adhesive. Note that the spread pieces 12 may be temporarily fixed to the outer peripheral surface of the anchor main-body 11 by an adhesive tape instead of an adhesive.

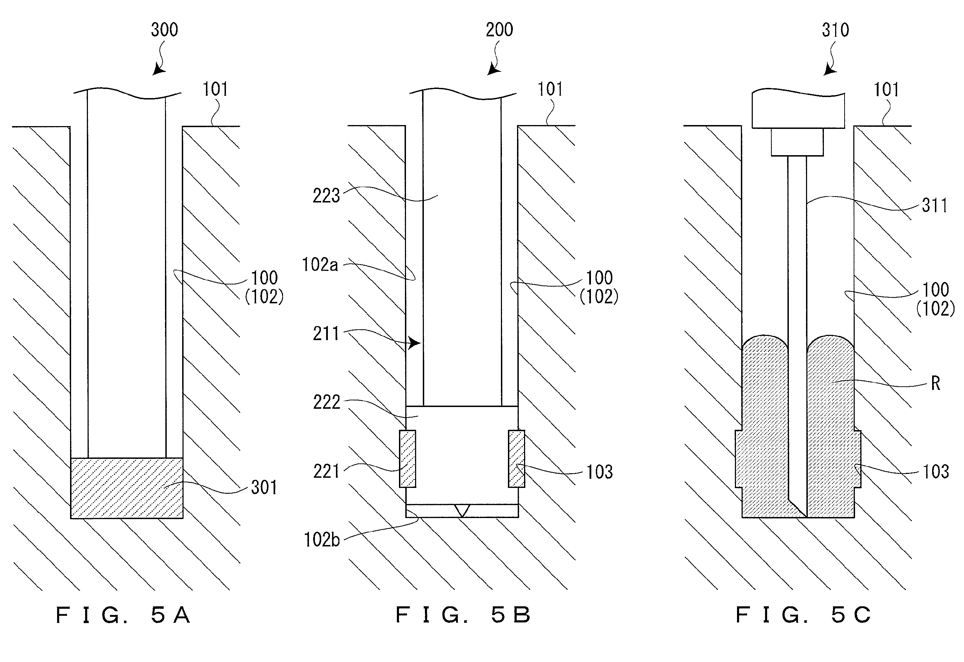

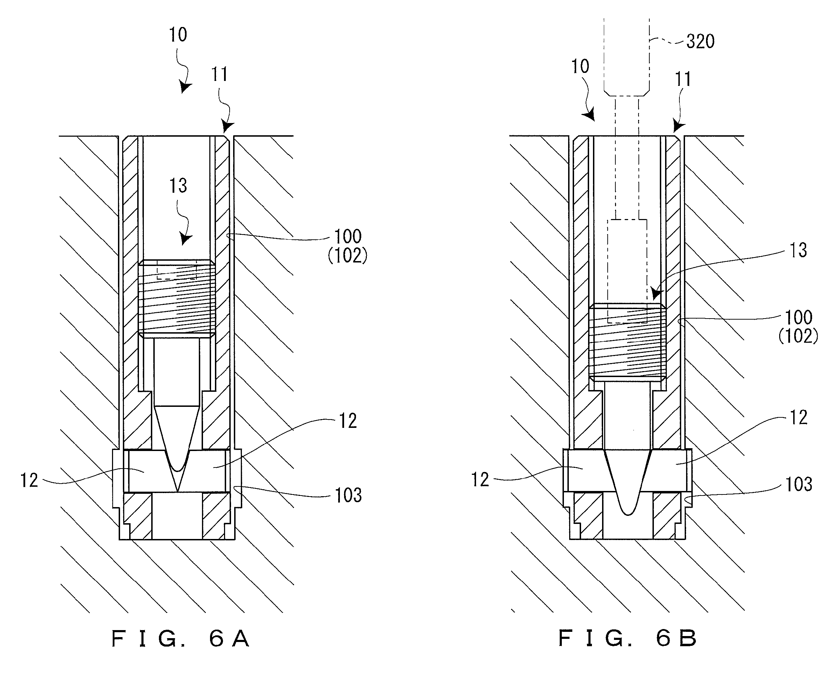

As described above, the spread pieces 12 are provided so as to correspond to the depth position of the diameter expansion portion 103 when the post-installed anchor 10 is inserted in the anchor hole 100. In addition, the spread pieces 12 are formed to have a size shorter than that of the diameter expansion portion 103 in the shaft direction. As will be described in detail later, the tip end of the post-installed anchor 10 (the anchor main-body 11) is bumped against the hole bottom of the anchor hole 100 when the cone portion 13 is driven. On the other hand, the position of the diameter expansion portion 103 from the hole bottom is defined according to a relationship with the above diameter expansion device 200 (see FIGS. 5B and 6A).

That is, in the embodiment, a distance from the tip end of the post-installed anchor 10 to the base ends (the upper ends in FIG. 3) of the respective spread pieces 12 is designed to be the same as a distance from the tip end of the diameter expansion drill bit 203 to the base ends (right ends in FIG. 2) of the cutting-blade portions 221 in the shaft direction. In addition, the length of the cutting-blade portions 221 is formed to be longer than the height of the spread pieces 12. That is, the spread pieces 12 of the post-installed anchor 10 anchored into the anchor hole 100 can be easily aligned with the diameter expansion portion 103 formed by the cutting-blade portions 221.

The cone portion 13 has a cone-portion main-body 41 that slides the two spread pieces 12 to the outside in the radial direction, and has a male-screw portion 42 threadedly engaged with the above female-screw portion 25 to squeeze the cone-portion main-body 41. The cone-portion main-body 41 and the male-screw portion 42 are integrally formed. When the male-screw portion 42 is screwed, the cone-portion main-body 41 advances in its rotating state and is then squeezed between the two spread pieces 12.

The male-screw portion 42 is formed to be, for example, a hexagon socket head male-screw. In the post-installed anchor 10 of the embodiment, the male-screw portion 42 is screwed by, for example, a driver drill with a driver bit 320 (see FIG. 6B). Specifically, the torque clutch of the driver drill is set in advance at a prescribed torque value to screw the male-screw portion 42. Thus, it becomes possible to bring the two spread pieces 12 into press-contact with the inner peripheral surface of the diameter expansion portion 103 without causing the individual differences between operators.

The cone-portion main-body 41 has a barrel portion 45 connected to the male-screw portion 42 and a tapered portion 46 connected to the barrel portion 45. The tapered portion 46 is formed into an inverted truncated cone shape with its tip end chamfered like a spherical crown, i.e., it is formed into a tapered shape. The tapered angle of the tapered portion 46 is set at an angle at which the respective spread pieces 12 move from their fixed positions to press-contact positions, and set at a relatively steep angle. When the male-screw portion 42 is screwed by the driver drill as described above, the two spread pieces 12 each slide to the outside in the radial direction. The driver drill idles when the tip ends of the respective spread pieces 12 are bumped against the inner peripheral surface of the diameter expansion portion 103, and the "clacking" noise caused at this time reveals that the driving of the cone portion 13 is finished.

Next, a description will be given, with reference to FIGS. 5A to 5C and FIGS. 6A and 6B, of a method for installing (a procedure for installing) the post-installed anchor 10. The method includes a boring step of boring the prepared-hole portion 102 using a boring device 300 (FIG. 5A), a diameter expansion step of forming the diameter expansion portion 103 in the prepared-hole portion 102 using the above diameter expansion device 200 (FIG. 5B), an injecting step of injecting an adhesive A into the anchor hole 100 using an injection device 310 (FIG. 5C), an inserting step of inserting the post-installed anchor 10 in the anchor hole 100 (FIG. 6A), and an anchoring step of spreading the two spread pieces 12 of the inserted post-installed anchor 10 (FIG. 6B). Note that the injecting step may be omitted.

In the boring step of FIG. 5A, the prepared-hole portion 102 having a depth corresponding to the length of the post-installed anchor 10 is bored using the boring device 300 in which a diamond core bit 301 is attached to an electric drill (not shown). In this case, the diamond core bit 301, by which the diameter of the prepared-hole portion 102 becomes greater than the diameter (outer diameter) of the post-installed anchor 10 by 0.3 mm or so, is used. In addition, as is the case with the above diameter expansion device 200, cooling liquid can be supplied to the diamond core bit 301 of the boring device 300. Note that a diamond non-core bit may be used instead of the diamond core bit 301 or the boring may be performed using a vibration drill or a hammer drill (a concrete drill bit).

In the diameter expansion step of FIG. 5B, the above diameter expansion device 200 with the diameter expansion drill bit 203 is used. The diameter expansion drill bit 203 is inserted in the prepared-hole portion 102 so as to be bumped against the hole bottom, and the diameter expansion drill bit 203 is rotated by the electric drill 201 to grind the diameter expansion portion 103. Thus, the anchor hole 100 having the diameter expansion portion 103 at the prescribed depth position of the prepared-hole portion 102 is formed. Note that cooling liquid is also supplied to the pair of cutting-blade portions 221 of the diameter expansion drill bit 203. Then, even after the diameter expansion portion 103 is formed, the supply of the cooling liquid is continued for a short time to wash the anchor hole 100. As a result, the cleaning of the anchor hole 100 becomes unnecessary prior to the injecting step.

In the injecting step of FIG. 5C, the injection device 310 constituted by, for example, a pump portion (not shown) and a nozzle portion 311 is used. The nozzle portion 311 is inserted in the anchor hole 100 so as to be bumped against the hole bottom, and the adhesive A is injected from the deepest portion of the anchor hole 100 by the pumping of the pump portion. As the adhesive A, a two-component epoxy cement is, for example, used.

In this case, the adhesive A is preferably injected by an amount at which the adhesive A is not brimmed over from the anchor hole 100 when the post-installed anchor 10 is inserted in the anchor hole 100 (the inserting step) and by an amount at which the adhesive A is attached to the spread pieces 12 and the cone portion 13. Next, although the inserting step and the anchoring step will be performed next, they are finished before the adhesive A is cured.

In the inserting step of FIG. 6A, the post-installed anchor 10 is inserted in the anchor hole 100 so as to be bumped against the hole bottom. In an actual operation, the post-installed anchor 10 is lightly tapped by a hammer or the like to be inserted in the anchor hole 100. When inserted, the post-installed anchor 10 is sunk into the anchor hole 100 and the spread pieces 12 of the post-installed anchor 10 correspond to the diameter expansion portion 103 of the anchor hole 100.

In the anchoring step of FIG. 6B, the cone portion 13 is screwed at a constant torque (the cone portion 13 is driven) using the driver drill with the driver bit 320 or the like. Thus, the two spread pieces 12 spread (move) to the outside in the radial direction to be brought into press-contact with the diameter expansion portion 103 of the anchor hole 100. Here, an operator finishes the anchoring step after confirming the idling of the driver drill. Then, the operator waits for the curing of the adhesive A.

As described above, the two spread pieces 12 are slidably supported by the guide opening portions 14 in the post-installed anchor 10 of the first embodiment. Therefore, the respective spread pieces 12 can be easily slid in the radial direction in such a manner that the cone portion 13 is only screwed at a relatively small torque. That is, the anchoring operation can be easily and stably performed regardless of the skills of an operator. In addition, since the two protruding spread pieces 12 are engaged to the diameter expansion portion 103 so as to be caught, high drawing strength can be reliably maintained.

In addition, the cone-portion main-body 41 is squeezed in a screwing manner by the male-screw portion 42. Therefore, when the male-screw portion 42 is fastened at a constant torque by the driver drill or the like, a force at which the two spread pieces 12 are brought into press-contact with the diameter expansion portion 103 can be also made constant. Moreover, the male-screw portion 42 is threadedly engaged with the female-screw portion 25. Therefore, even when the two spread pieces 12 receive a strong reaction force from the diameter expansion portion 103, the cone-portion main-body 41 can be prevented from being loosed. In addition, the spread pieces 12 and the cone portion 13 are fixed by the adhesive A. Therefore, in this regard, the cone-portion main-body 41 can be also prevented from being loosed.

Note that the number of the spread pieces 12 and the guide opening portions 14 may be each three or more. However, the three or more spread pieces 12 and the three or more guide opening portions 14 are preferably arranged at even intervals in the peripheral direction. In addition, the cross-sectional shapes of the spread pieces 12 and the guide opening portions 14 may be a circle, an inverted triangle, an inverted trapezoid, or the like. Moreover, the outer peripheral surface of the diameter expansion portion 103 may be tapered.

Next, a description will be given, with reference to FIGS. 7A to 7D, of a post-installed anchor 10A according to a second embodiment. Note that the second embodiment will mainly describe only portions different from those of the first embodiment.

In the post-installed anchor 10A, a female-screw portion 25 of a bolt support portion 21 of an anchor main-body 11 is constituted by a first female-screw portion 25a for a joining bolt 26 and a second female-screw portion 25b for a cone portion 13. Further, the second female-screw portion 25b is formed to have a smaller diameter than that of the first female-screw portion 25a.

In addition, the cone portion 13 has a cone-portion main-body 41A and a male-screw portion 42A as is the case with the first embodiment, but the cone-portion main-body 41A of the second embodiment is formed to have a wedge shape on its tip-end side. Accordingly, unlike the cone portion 13 of the first embodiment, the cone-portion main-body 41A and the male-screw portion 42A are separately formed. That is, the male-screw portion 42A is screwed to advance since it is threadedly engaged with the second female-screw portion 25b. However, the cone-portion main-body 41A is pressed by the male-screw portion 42A to be squeezed between two spread pieces 12.

The cone-portion main-body 41 is a column body with its half portion on one side cut into a wedge shape, and integrally formed by a barrel portion 45 serving as a half portion on its base-end side and a wedge portion 47 serving as the other half portion on its tip-end side. In this case, the inner-end surfaces of the respective spread pieces 12 are also formed into a slant surface 35 having a shape complementary to a wedge slant surface 47a of the wedge portion 47. When screwed, the male-screw portion 42A contacts the cone-portion main-body 41A and causes the same to advance. The advancing cone-portion main-body 41A slides the two spread pieces 12 to an outside in a radial direction.

In the post-installed anchor 10A of the second embodiment described above, the respective spread pieces 12 can be also smoothly slid by the wedge slant surface 47a of the wedge portion 47 without any difficulty. In addition, when the male-screw portion 42A is fastened at a constant torque, a force at which the plurality of spread pieces 12 is brought into press-contact with a diameter expansion portion 103 can be also made constant. Note that the cone-portion main-body 41A may be a prism body with its half portion on one side cut into a wedge shape.

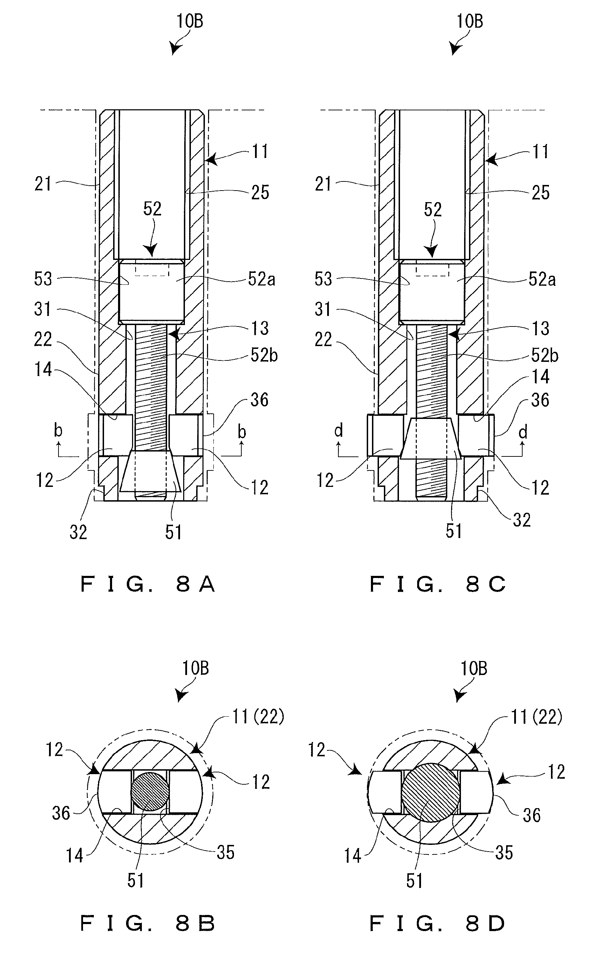

Next, a description will be given, with reference to FIGS. 8A to 8D, of a post-installed anchor 10B according to a third embodiment. Note that the third embodiment will also mainly describe only portions different from those of the first embodiment.

In the post-installed anchor 10B, a cone portion 13 has a cone-portion main-body 51 that slides two spread pieces 12 to an outside in a radial direction and a bolt portion 52 having a head portion 52a rotatably supported by the inner peripheral surface of an anchor main-body 11 and threadedly engaged with the cone-portion main-body 51 in a shaft direction.

The bolt portion 52 has the head portion 52a with a hexagon socket, and the head portion 52a is rotatably supported by a stepped hole portion 53 formed between a female-screw portion 25 (corresponding to the above first female-screw portion 25a) and a loose-insertion hole 31. In addition, a shaft portion 52b of the bolt portion 52 with a male screw extends to a position in the vicinity of the tip end of the anchor main-body 11. Further, the shaft portion 52b is threadedly engaged with the cone-portion main-body 51 having a female screw at its axis portion. Therefore, the cone-portion main-body 51 advances/retreats when the bolt portion 52 is rotated forwardly/reversely.

The cone-portion main-body 51 is formed into a truncated cone shape and engages with two spread pieces 12 from the tip-end side of the anchor main-body 11. When the bolt portion 52 is rotated rightward, the cone-portion main-body 51 is attracted to slide the two spread pieces 12 to the outside in the radial direction.

As described above, the cone-portion main-body 51 is attracted by the bolt portion 52 to spread the two spread pieces 12 according to the post-installed anchor 10B of the third embodiment. Therefore, when the bolt portion 52 is fastened at a constant torque by a driver drill or the like, a force at which the plurality of spread pieces 12 is brought into press-contact with a diameter expansion portion 103 can be also made constant. In addition, the cone-portion main-body 51 is threadedly engaged with the bolt portion 52. Therefore, even when the spread pieces 12 receive a strong reaction force from the diameter expansion portion 103, the cone-portion main-body 51 can be prevented from being loosed.

Note that the cone-portion main-body 51 may be formed into a wedge shape as is the case with the second embodiment. In the above embodiment, the cone-portion main-body 51 is attracted by the bolt portion 52. Alternatively, the cone-portion main-body 51 may be oriented in an opposite direction and squeezed. In this case, however, the bolt portion 52 and the cone-portion main-body 51 are preferably joined together by left-hand screwing.

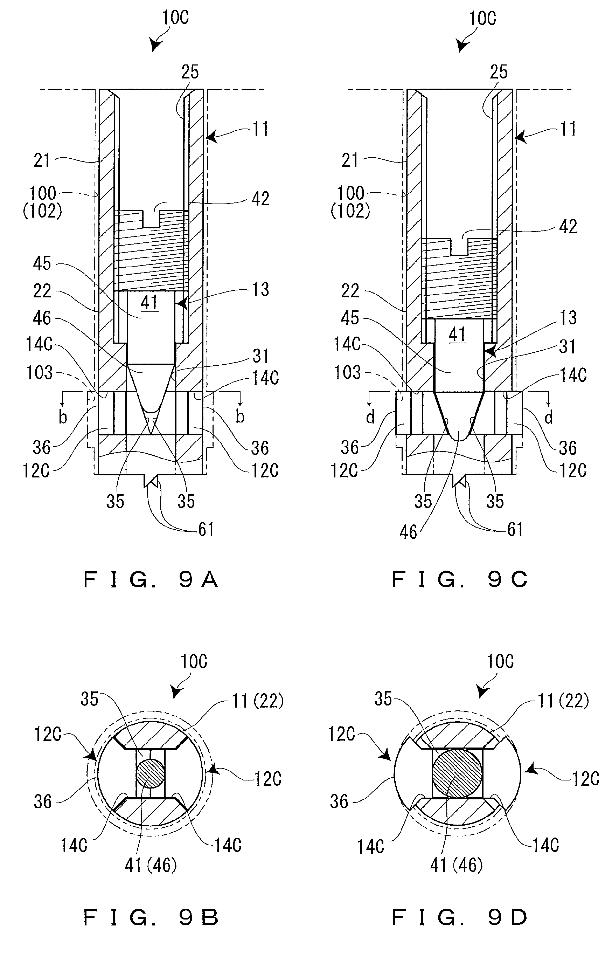

Next, a description will be given, with reference to FIGS. 9A to 9D, of a post-installed anchor 10C according to a fourth embodiment. Note that the fourth embodiment will also mainly describe portions different from those of the first embodiment.

The post-installed anchor 10C is different in the shapes of spread pieces 12C and guide opening portions 14C from those of the first embodiment. In addition, at the tip end of an anchor main-body 11, two rotation preventing protrusions 61 that prevent the anchor main-body 11 from rotating with a cone portion 13 are provided instead of the above two notch portions 32. Moreover, a male-screw portion 42 has a straight-line hole (a slotted screwdriver) instead of a tool hexagon socket (Allen wrench).

The respective spread pieces 12C of the embodiment are formed to have a fan shape in plan view at their half portions on tip-end sides in a radial direction. Specifically, the half portions on the tip-end sides of the spread pieces 12C are formed to have an opening angle of 90° about the center of the anchor main-body 11. In order to suit this, the guide opening portions 14C are also formed to have an angle of 90° about the center of the anchor main-body 11. Thus, portions corresponding to 180° (= 90° × 2) in the peripheral direction of the anchor main-body 11 serve as the guide opening portions 14C, and the cross-sectional areas of portions other than the guide opening portions 14C become equal to the total sum of the cross-sectional areas of the fan-shaped portions of the two spread pieces 12C. This also results in a maximum length at which the spread pieces 12C are caught in a diameter expansion portion 103.

The two rotation preventing protrusions 61 protrude from the tip end of the anchor main-body 11 at positions point-symmetrically by 180°. The respective rotation preventing protrusions 61 have an acute tip-end, the protrusions having a vertical side as its front side and a slant side as its rear side in the rotation direction of the male-screw portion 42. Thus, compared with frictional resistance caused when the male-screw portion 42 is rotated, the frictional resistance between the rotation preventing protrusions 61 of the anchor main-body 11 and the hole bottom of an anchor hole 100 extremely increases. Therefore, the anchor main-body 11 can be prevented from rotating with the cone portion 13 when the male-screw portion 42 (the cone portion 13) is fastened.

In the post-installed anchor 10C of the fourth embodiment, the respective spread pieces 12C can be smoothly spread by the cone portion 13 without any difficulty. In addition, when the male-screw portion 42 is fastened at a constant torque, a force at which the plurality of spread pieces 12C is brought into press-contact with a diameter expansion portion 103 can be also made constant. Moreover, drawing strength can be increased by the fan-shaped spread pieces 12C.

Meanwhile, in the above first to fourth embodiments, the cone portions 13 are driven in a screwing manner. That is, the cone portions 13 are constituted by the cone-portion main-bodies 41, 41A, and 51 and the male-screw portions (the bolt portions) 42, 42A, and 52. In the present invention, however, it is also possible to omit the male-screw portions (the bolt portions) 42, 42A, and 52 and constitute the cone portions 13 only by members corresponding to the cone-portion main-bodies 41, 41A, and 51 (not shown). In this case, the cone portions 13 are driven (the anchor main-body 11 is driven in the third embodiment) toward the two spread pieces 12 and 12C using a driving rod or the like inserted in the anchor main-bodies 11. In this case, the two spread pieces 12 and 12C can be also appropriately spread at a relatively small driving force.

In addition, for the contact portions between the cone-portion main-bodies 41, 41A, and 51 and the spread pieces 12 and 12C, at least one of the cone-portion main-bodies 41, 41A, and 51 and the spread pieces 12 and 12C is only required to have a slant surface (tapered surface). Moreover, the guide opening portions 14 and 14C may have a slant raising toward their tip ends.

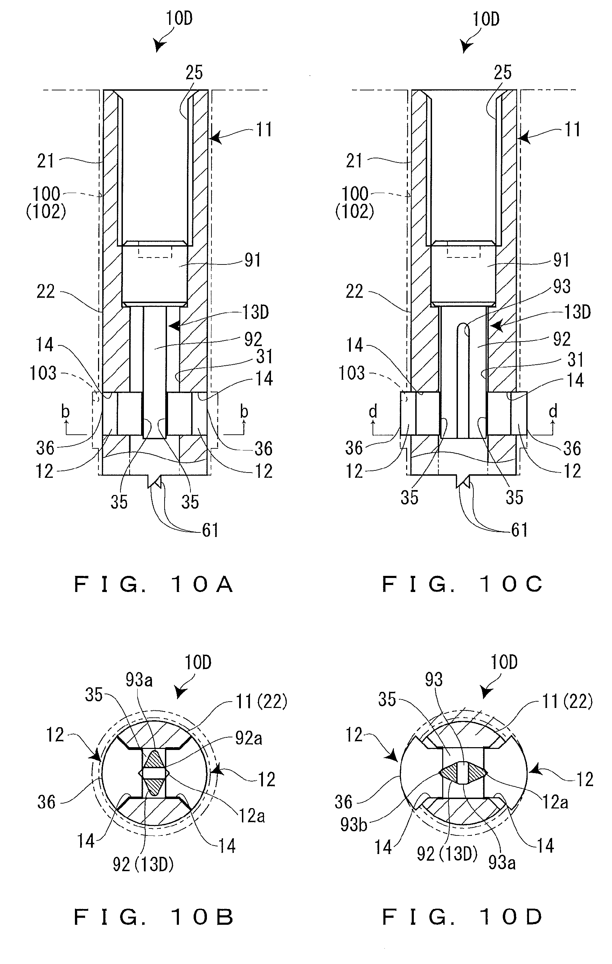

Next, a description will be given, with reference to FIGS. 10A to 10D, of a post-installed anchor 10D according to a fifth embodiment. Note that the fifth embodiment will also mainly describe portions different from those of the fourth embodiment.

In the post-installed anchor 10D, a cone portion 13D is configured to simply rotate by 90° to slide two spread pieces 12 to an outside in a radial direction. In addition, the spread pieces 12 and guide opening portions 14 have the same basic shapes as those of the fourth embodiment.

As is the case with the third embodiment, the cone portion 13D is integrally formed by a hexagon socket head portion 91 rotatably supported by the inner peripheral surface of an anchor main-body 11 and formed by a cam portion 92 connected to the head portion 91. The cam portion 92 is formed into a substantially diamond shape in cross section and contacts the two spread pieces 12 at its outer peripheral surface. In addition, the cam portion 92 has a split slit 93 formed so as to split the cam portion 92 into two in its large-diameter direction. Further, the cam portion 92 produces spring properties in the large-diameter direction due to the split slit 93.

The two spread pieces 12 are brought into a non-spreading state when two small-diameter tip-ends 92a of the cam portion 92 contact both the spread pieces 12. When the cam portion 92 starts rotating in this state, the two spread pieces 12 gradually spread. Then, when the cam portion 92 rotates by 90°, two large-diameter tip-ends 92b of the cam portion 92 contact both the spread pieces 12 with the spring properties to bring the two spread pieces 12 into a spreading state.

On the other hand, on the base-end surfaces of the respective spread pieces 12, small V-grooves 12a with which the respective large-diameter tip-ends 92b of the cam portion 92 rotating by 90° engage are formed. When the cam portion 92 rotates by 90° to bring the two spread pieces 12 into a spreading state, the large-diameter tip-ends 92b of the cam portion 92 sink into the V-grooves 12a. As a result, the spreading state of the two spread pieces 12 is confirmed.

In the above post-installed anchor 10D of the fifth embodiment, the respective spread pieces 12 can be smoothly spread without any difficulty in such a manner that the cone portion 13D is only rotated by 90°. Note that the cam portion 92 may be formed into an elliptic shape in cross section.

Meanwhile, for example, when the anchor hole 100 is bored to have an extremely smooth hole bottom in the above embodiments, there is a likelihood that the notch portions 32 and the rotation preventing protrusions 61 of the anchor main-bodies 11 slip and cause the anchor main-bodies 11 to rotate with the cone portions 13. In view of this, the post-installed anchor system of this embodiment has a rotation preventing jig 80 that prevents the anchor main-bodies 11 from rotating with the cone portions 13.

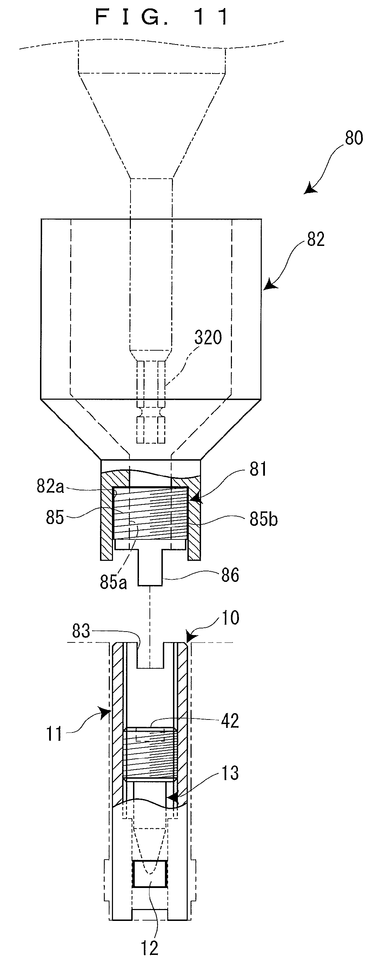

As shown in FIG. 11, the rotation preventing jig 80 has a steel jig main-body 81 and an aluminum jig holder 82 having the jig main-body 81 attached to its end. In addition, an anchor main-body 11 of a post-installed anchor 10 has a pair of engagement concave portions 83 at its base end (the post-installed anchor 10 of the first embodiment is shown in the figure).

The jig main-body 81 has a cylindrical fixing portion 85 having a tool insertion hole 85a used to fasten a cone portion 13 inside it, and has a pair of engagement convex portions 86 protruding from the tip end of the fixing portion 85 and engaging with the above engagement concave portions 83. In addition, on the outer peripheral surface of the fixing portion 85, a male screw 85b by which the jig main-body 81 is threadedly engaged with the jig holder 82 is formed.

On the other hand, the jig holder 82 is entirely formed into a funnel shape and has a female screw 82a, with which the jig main-body 81 is threadedly engaged, at its tip end. When the jig main-body 81 is threadedly engaged with the tip end of the jig holder 82, the fixing portion 85 of the jig main-body 81 sinks into the tip end of the jig holder 82 and only the pair of engagement convex portions 86 protrudes. In addition, the inside of the jig holder 82 and the insertion hole 85a of the jig main-body 81 are placed in communication with each other.

The rotation preventing jig 80 thus configured handles the jig holder 82 holding the jig main-body 81 to cause the engagement convex portions 86 of the jig main-body 81 to engage with the engagement concave portions 83 of the anchor main-body 11 driven into the anchor hole 100. Thus, the useless rotation of the anchor main-body 11 is prevented. In this state, a tool (e.g., a driver bit 320) used to fasten the cone portion 13 is put on the cone portion 13 via the insertion hole 85a from the side of the jig holder 82 to fasten the cone portion 13.

As described above, the cone portion 13 is fastened using the rotation preventing jig 80 to prevent the anchor main-body 11 from rotating with the cone portion 13, whereby the two spread pieces 12 can be appropriately spread.

10, 10A, 10B, 10C, 10D Post-installed anchor
- 11: Anchor main-body
- 12, 12C: Spread piece
- 13, 13D: Cone portion
- 14, 14C: Guide opening portion
- 21: Bolt support portion
- 22: Frame fixing portion
- 25: Female-screw portion
- 32: Notch portion
- 36: Arc surface
- 41, 41A: Cone-portion main-body
- 42, 42A: Male-screw portion
- 46: Tapered portion
- 47: Wedge portion
- 51: Cone-portion main-body
- 52: Bolt portion
- 52b: Shaft portion
- 61: Rotation preventing protrusion
- 80: Rotation preventing jig
- 81: Jig main-body
- 82: Jig holder
- 83: Engagement concave portion
- 85a: Insertion hole
- 86: Engagement convex portion
- 92: Cam portion
- 100: Anchor hole
- 101: Frame body
- 102: Prepared-hole portion
- 103: Diameter expansion portion
- 200: Diameter expansion device
- 203: Diameter expansion drill bit
- 221: Cutting-blade portion
- A: Adhesive

## Claims

1. A post-installed anchor anchored into an anchor hole having a diameter expansion portion at a prescribed depth position thereof, the post-installed anchor comprising:
an anchor main-body inserted in the anchor hole;
a plurality of spread pieces slidably provided in the anchor main-body so as to spread toward the diameter expansion portion; and
a cone portion that slides each of the plurality of spread pieces to an outside.

2. The post-installed anchor according to claim 1, wherein
the respective spread pieces are slidably provided in a radial direction with respect to the anchor main-body.

3. The post-installed anchor according to claim 2, wherein
the plurality of spread pieces is constituted by two spread pieces arranged at positions point-symmetrically by 180°.

4. The post-installed anchor according to claim 2 or 3, wherein
the respective spread pieces are slidably provided at guide opening portions formed in the anchor main-body and formed into a shape complementary to the guide opening portions.

5. The post-installed anchor according to any one of claims 1 to 4, wherein
tip-end surfaces of the respective spread pieces are formed into an arc surface following an outer peripheral surface of the anchor main-body.

6. The post-installed anchor according to any one of claims 1 to 5, wherein
the respective spread pieces are temporarily fixed to the anchor main-body such that engagement-side tip ends thereof do not protrude from the outer peripheral surface of the anchor main-body.

7. The post-installed anchor according to any one of claims 1 to 6, wherein
the cone portion includes
a cone-portion main-body that moves the plurality of spread pieces to the outside in the radial direction and
a male-screw portion that is threadedly engaged with a female-screw portion formed on an inner peripheral surface of the anchor main-body and squeezes the cone-portion main-body.

8. The post-installed anchor according to claim 7, wherein
the cone-portion main-body includes a tapered portion formed into a tapered shape, and
the cone-portion main-body and the male-screw portion are integrally formed.

9. The post-installed anchor according to claim 7, wherein
the cone-portion main-body includes a wedge portion having a plurality of slant surfaces corresponding to the plurality of spread pieces, and
the cone-portion main-body and the male-screw portion are separately formed.

10. The post-installed anchor according to any one of claims 1 to 6, wherein
the cone portion includes
a cone-portion main-body that moves the plurality of spread pieces to the outside in the radial direction and
a bolt portion that has a head portion thereof rotatably supported by an inner peripheral surface of the anchor main-body and is threadedly engaged with the cone-portion main-body in a shaft direction thereof.

11. The post-installed anchor according to any one of claims 8 to 10, wherein
a rotation preventing protrusion, which prevents the anchor main-body from rotating with the cone portion when the cone portion is fastened, protrudes from a tip end of the anchor main-body.

12. A method for installing the post-installed anchor according to any one of claims 1 to 11, the method comprising:
a boring step of boring a prepared-hole portion in the anchor hole;
a diameter expansion step of forming the diameter expansion portion in the prepared-hole portion;
an inserting step of inserting the post-installed anchor in the anchor hole; and
an anchoring step of spreading the plurality of spread pieces with the cone portion.

13. The method for installing the post-installed anchor according to claim 12, the method further comprising:
an injecting step of injecting an adhesive into the anchor hole, the injecting step being performed between the diameter expansion step and the inserting step.

14. A post-installed anchor system comprising:
the post-installed anchor according to any one of claims 1 to 11; and
a diameter expansion drill bit having a cutting-blade portion, which forms the diameter expansion portion in the anchor hole, at a tip end thereof, wherein,
in the shaft direction,
a length of the cutting-blade portion is formed to be longer than a length of the respective spread pieces, and
a distance from a tip end of the post-installed anchor to base ends of the respective spread pieces is substantially the same as a distance from a tip end of the diameter expansion drill bit to a base end of the cutting-blade portion.

15. A rotation preventing jig that prevents the anchor main-body from rotating with the cone portion when the cone portion is fastened and is used for the post-installed anchor according to any one of claims 7 to 11, the post-installed anchor having an engagement concave portion formed on a base end of the anchor main-body, the rotation preventing jig comprising:
a cylindrical jig main-body that has an engagement convex portion, which engages with the engagement concave portion, at a tip end thereof and has a tool insertion hole for fastening the cone portion formed therein; and
a jig holder that holds the jig main-body at a tip end thereof and is formed into a funnel shape.
